# EUROPÄISCHE PATENTSCHRIFT

(11) **EP 2 484 552 B1**
(45) Veröffentlichungstag und Bekanntmachung des Hinweises auf die Patenterteilung: **11.12.2013**
(21) Anmeldenummer: 12075008.8
(22) Anmeldetag: 26.01.2012
(51) Int. Cl.: B60P 7/15

(54) **Sicherungseinrichtung für einen Rohrtransport**
Safety device for a pipe transport
Dispositif de sécurisation pour un transport de tuyaux

(30) Priorität: 02.02.2011 DE 202011000247 U
(43) Veröffentlichungstag der Anmeldung: 08.08.2012
(73) Patentinhaber: Europipe GmbH, 45473 Mülheim an der Ruhr (DE)
(72) Erfinder: Sebastian, Wilhelm, 42579 Heiligenhaus (DE); Hesse, Wolfgang, 45475 Mülheim (DE)
(74) Vertreter: Meissner, Peter E.

(56) Entgegenhaltungen:
- DE-A1- 10 134 887
- DE-A1-102008 011 704
- DE-U1-202007 011 760
- DE-U1-202008 014 035
- US-B1- 6 210 087

## Beschreibung

Die Erfindung betrifft eine Sicherungseinrichtung für eine Ladebodenschiene auf einem Ladeboden, insbesondere für eine Ladebodenschiene für (Rohr-)Transportblöcke für einen Ladeboden einer Transporteinrichtung mit Taschen, gemäß dem Anspruch 1.

Aus dem allgemeinen Stand der Technik sind Transportvorrichtungen zum Transport von Rohren, Blöcken oder anderem Transportgut bekannt. Hierbei werden die Transportblöcke paarweise zueinander auf einem Ladeboden befestigt. Die Transportblöcke sind dabei als Schräge oder Krümmung ausgebildet, die aufeinander nach unten zuweisen, sodass ein Transportgut aufgrund des hierbei angewandten Prinzips der schiefen Ebene zwischen den Transportblöcken gehalten werden. Der Ladeboden ist beispielsweise eine Ladeebene eines Lastkraftwagens oder eines Eisenbahnwaggons. Die Transportblöcke werden dabei direkt mit dem Ladeboden verbunden, beispielsweise durch Festnageln oder dergleichen.

Durch Änderungen der Beschaffenheit der Ladeböden und geänderte Sicherheitsvorschriften ist mittlerweile keine direkte Verbindung von Ladeboden und Transportblock mittels Festnageln oder dergleichen möglich, sodass andere, zuverlässige Sicherungsmaßnahmen zur Sicherung von Transportblöcken erforderlich sind.

Aus der DE 20 2008 014 035 U1 ist eine Ladesicherung für Fahrzeuge bekannt, mit mindestens einem Sicherungsbalken, der mittels einer Halteeinrichtung im Bereich einer Ladefläche des Fahrzeuges montierbar ist. Der Sicherungsbalken ist in verschiedenen Drehlagen an der Haltevorrichtung montierbar und weist an seinen Längsseiten mindestens ein Funktionelement auf, beispielsweise eine Zurrleiste zur Sicherung des Ladegutes.

Es ist deshalb eine Aufgabe der vorliegenden Erfindung, eine Sicherungseinrichtung, eine Verladeeinrichtung, eine Transporteinrichtung und ein Verfahren hierzu zu schaffen, welche eine einfache und flexible Handhabung und eine sichere Befestigung für unterschiedliche Ladeböden und unterschiedliche Transportblockanordnungen ermöglichen.

Diese und weitere Aufgaben werden ausgehend von einer Sicherungseinrichtung gemäß dem Anspruch 1, in Verbindung mit deren Merkmalen gelöst. Vorteilhafte Weiterbildungen der Erfindung sind in den abhängigen Ansprüchen angegeben oder werden nachstehend im Zusammenhang mit der Beschreibung der Figuren angegeben.

Die Erfindung schließt die technische Lehre ein, dass bei einer Sicherungseinrichtung für eine Ladebodenschiene auf einem Ladeboden, insbesondere für eine Ladebodenschiene für (Rohr-)Transportblöcke für einen Ladeboden einer Transporteinrichtung mit Taschen, umfassend mindestens einen Tascheneinsatz zum Einsetzen der Sicherungseinrichtung in eine korrespondierende Tasche eines Ladebodens, mindestens einen Haltearm, der mit dem Tascheneinsatz über mindestens ein erstes Verbindungsmittel quer von diesem abragend verbunden ist, und mindestens einen Verbindungsträger, der mit dem Haltearm über mindestens ein zweites Verbindungsmittel quer von dem abragend verbunden ist, vorgesehen ist, dass der Verbindungsträger mindestens ein drittes Verbindungsmittel aufweist, um mit der Ladebodenschiene verbunden zu werden und so eine Sicherung der Ladebodenschiene über die Sicherungseinrichtung im Zusammenwirken mit der Tasche zu realisieren. Die Sicherungseinrichtung ist aus einem Material ausgebildet, welches für eine Kraftübertragung, insbesondere eine Kraftübertragung von Kräften im Bereich größer gleich 1 Tonne geeignet ist, bevorzugt aus einem Stahl oder Metall. Im Wesentlichen umfasst die Sicherungseinrichtung drei tragende Bauteile, den Einsatz oder Tascheneinsatz, den Haltearm und den Verbindungsträger. Alle drei sind paarweise quer, insbesondere rechtwinklig zueinander ausgerichtet, sodass die drei tragenden Bauteile einen dreidimensionalen Raum aufspannen. Der Haltearm und der Verbindungsträger spannen dabei eine Ebene auf, die bei einem Einsetzten des Einsatzes in eine Tasche eines Ladebodens parallel zu dem Ladeboden, insbesondere angrenzend an den aufliegend auf dem Ladeboden, angeordnet ist.

Der Einsatz ist zum Einsetzen in eine Tasche ausgebildet. Hierzu weist der Einsatz eine entsprechende Form auf und erstreckt sich in Hauptrichtung entlang der Taschenhauptrichtung, das heißt insbesondere in vertikale oder z-Richtung. In Hauptrichtung weist der Einsatz einen Querschnitt auf, der konstant ist. In anderen Ausführungsformen variiert der Querschnitt in die Hauptrichtung. Die Querschnittsform des Einsatzes ist beliebig. Bevorzugt ist der Querschnitt rechteckförmig, kreisförmig, quadratförmig oder mehreckförmig. Zur Einführung in eine Tasche weist der Einsatz in einer Ausführungsform eine Verjüngung auf, beispielsweise in Form von Fasen oder Abrundungen.

Der Einsatz ist über erste Verbindungsmittel mit dem Haltearm verbunden. Die Verbindungsmittel sind dabei als stoffschlüssige, kraftschlüssige und/oder formschlüssige Verbindungsmittel ausgebildet. Bevorzugt ist der Einsatz unlösbar mit dem Haltearm verbunden. In einer alternativen Ausführungsform sind Haltearm und Einsatz einteilig ausgebildet. Bevorzugt ist der Haltearm mit dem Einsatz verschweißt. Der Haltearm liegt dabei bevorzugt auf einer der Tasche abgewandten Stirnfläche des Einsatzes auf. Andere mögliche Verbindungsmittel sind beispielsweise Verschraubungen, Nieten, Bolzen- oder Steckverbindungen oder dergleichen.

Bevorzugt ist der Haltearm rechtwinklig zu dem Einsatz angeordnet, das heißt horizontal parallel zu der Ebene des Ladebodens. Der Haltearm erstreckt sich somit in eine x-Richtung. In einer Ausführungsform ist der Haltearm einteilig ausgeführt. In einer bevorzugten Ausführungsform ist der Haltearm mehrteilig ausgeführt. Die mehreren Teile des Haltearms sind dabei lösbar oder unlösbar miteinander über entsprechende Verbindungsmittel verbunden. Die Verbindungsmittel sind in einer Ausführungsform identisch zu den ersten Verbindungsmitteln zwischen Einsatz und Haltearm. In anderen Ausführungsformen unterscheiden sich die Verbindungsmittel zumindest teilweise von den ersten Verbindungsmitteln zwischen Einsatz und Haltearm.

Über zweite Verbindungsmittel ist der Haltearm mit dem Verbindungsträger verbunden. Der Verbindungsträger ist dabei so mit dem Haltearm verbunden, dass Haltearm und Verbindungsträger in einer Ebene parallel zu dem Ladeboden, insbesondere an diesen angrenzend und/oder auf diesem aufliegend angeordnet sind. Die zweiten Verbindungsmittel sind in einer Ausführungsform identisch mit den ersten Verbindungsmitteln ausgeführt. Bevorzugt sind die zweiten Verbindungsmittel unterschiedliche zu den ersten Verbindungsmitteln ausgeführt.

Der Verbindungsträger ist bevorzugt rechtwinklig zu dem Haltearm angeordnet, sodass der Verbindungsträger sich hauptsächlich in eine horizontale Richtung parallel zu dem Ladeboden, das heißt in eine y-Richtung erstreckt.

In einer einfachen Ausführungsform weist die Sicherungseinrichtung einen Einsatz, einen Haltearm und einen Verbindungsträger auf. In anderen Ausführungsformen weist die Sicherungseinrichtung beispielsweise mehrere Einsätze, mehrere Haltearme und/oder mehrere Verbindungsträger auf. Die Haupterstreckungsrichtungen der Bauteile bleibt dabei unverändert. In einer Ausführungsform sind die mehrfachen Ausführungen von Einsatz, Haltearm und/oder Verbindungsträger in die gleiche positive jeweilige Hauptrichtung ausgerichtet. In anderen Ausführungsformen verlaufen die mehrfach Ausführungen von Einsatz, Haltearm und/oder Verbindungsträger zumindest teilweise entgegengesetzt, das heißt beispielsweise, dass ein Verbindungsträger in positive y-Richtung verläuft und ein anderer Verbindungsträger in negative y-Richtung. Auf diese Weise lassen sich beispielsweise zwei voneinander beabstandete Ladebodenschienen über die zwei Verbindungsträger mit einem Haltearm und mit einem Einsatz verbinden. Bevorzugt ist eine Ausführungsform, in welcher die Sicherungseinrichtung einen Einsatz, einen Haltearm und zwei Verbindungsträger aufweist. Die Verbindungsträger, Haltearm und Einsatz verlaufen in ihre jeweiligen Haupterstreckungsrichtungen bevorzugt geradlinig. In anderen Ausführungsformen verlaufen der Haltearm, der Einsatz und/oder der Verbindungsträger zumindest teilweise gekrümmt oder nicht geradlinig.

Je nach Einsatzfall sind die Erstreckungsrichtungen von Einsatz, Haltearm und Verbindungsträger unterschiedlich ausgebildet. Um für verschiedene Einsatzzwecke nicht unterschiedliche tragende Bauteile zu verwenden, sind in einer bevorzugten Ausführungsform Verstellmittel vorgesehen, mit denen sich die Form, insbesondere die Erstreckung der Sicherungseinrichtung verändern oder verstellen lässt.

Die Sicherheitseinrichtung ist in einer Ausführungsform ausgelegt für hohe Lasten, beispielsweise für Lasten im Bereich von etwa 1 t oder im Bereich von etwa 1,5 t. Entsprechend sind die einzelnen Bauteile dimensioniert.

In einer Ausführungsform der vorliegenden Erfindung ist vorgesehen, dass die Sicherungseinrichtung mindestens ein Verstellmittel aufweist, über welches die Sicherungseinrichtung in mindestens eine Richtung verstellbar ist. Die Verstellmittel sind in einer Ausführungsform linear und/oder rotatorisch verstellbar ausgebildet. In einer Ausführungsform umfassen die Verstellmittel einen Linearantrieb wie eine Schraub- oder Spindelantrieb. In anderen Ausführungsformen umfassen die Verstellmittel ein teleskopartiges und/oder ausfahrbares Verstellmittel. Mindestens eines der wesentlichen Bauteile Einsatz, Haltearm oder Verbindungsträger weist mindestens ein Verstellmittel auf. Insbesondere sind die Verstellmittel derart ausgebildet, dass diese das jeweilige Bauteil in ihrer jeweiligen Haupterstreckungsrichtung verändern. In anderen Ausführungsformen ist auch eine Veränderung der Form in einer andere Richtung als die Haupterstreckungsrichtung vorgesehen. Bevorzugt weist in einer Ausführungsform der Haltearm eine Verstelleinrichtung auf. Der Haltearm ist hierzu mehrteilig, zum Beispiel zweiteilig ausgebildet. Die beiden Teile des Haltearms sind in einer Ausführungsform über die Verstellmittel relativ zueinander bewegbar, insbesondere in die entsprechende Haupterstreckungsrichtung. Das Verstellmittel ist bevorzugt als Schraub- oder Spindeleinrichtung ausgebildet. Über einen entsprechenden Aktuator oder mittels Handrad werden die Verstellmittel betätigt. In einer bevorzugten Ausführungsform ist die Zweiteilung des Haltearms nahe des Einsatzes und entfernt von der nächsten Verbindungsstelle mit einem Verbindungsträger. Das Verstellmittel durchdringt den einsatznahen Teil des Haltearms und ragt über diesen heraus, so dass eine einsatzseitige Betätigung über den herausragenden Teil realisiert ist. Bei einer entsprechenden Betätigung der Verstelleinrichtung fahren die beiden Teile des Haltearms aufeinander zu oder auseinander. Je nach Ausführung eines Gewindes der Verstelleinrichtung ist dabei eine Fein- oder Grobeinstellung realisierbar. Es sind auch mehrere Verstelleinrichtungen je Bauteil realisierbar. Die Verstellung kann in einer Ausführungsform auch durch Aufstecken oder sonstiges Verlängern eines Bauteils realisiert werden. So lassen sich beispielsweise an den Haltearm weitere Haltearmverlängerungen befestigen. Die Verstellmittel sind bevorzugt an einem Bauteil und nicht bauteilübergreifend ausgebildet. In anderen Ausführungsformen sind bauteilübergreifende Verstellmittel vorgesehen, die dann beispielsweise in Verbindungsmittel integriert sind.

In einer weiteren bevorzugten Ausführungsform der vorliegenden Erfindung ist deshalb vorgesehen, dass mindestens ein Verstellmittel mit mindestens einem der Verbindungsmittel integriert ausgebildet ist. Auf diese Weise sind weniger Bauteile erforderlich als bei separater Ausführung. Beispielsweise weist der Haltearm verschiedene Bohrungen oder Durchgangsöffnungen für eine Steckverbindung auf. Auch der Verbindungsträger weist dazu passend ausgebildete Durchgangsöffnungen auf. Mittels eines Bolzens sind dann Haltearm und Verbindungsträger miteinander verbindbar. Dadurch dass der Haltearm und/oder der Verbindungsträger mehrere nebeneinander angeordnete Durchgangsöffnungen für eine Steckverbindung aufweist, lässt sich die Position der beiden Bauteile zueinander beliebig verändern.

Die Verbindungsmittel mit integriertem Verstellmittel sind in einer Ausführungsform diskret verteilt an den jeweiligen Bauteilen ausgebildet, beispielsweise als benachbart angeordnete Durchgangsöffnungen. In anderen Ausführungsformen sind die Verbindungsmittel mit integrierten Verstellmitteln kontinuierlich verteilt ausgebildet, beispielsweise als Langloch oder Langlöcher. Wiederum andere weisen Führungen und in den Führungen verfahrbare Mittel oder dergleichen auf. Bei einer diskreten Verteilung sind die Verstellmittel beispielsweise äquidistant oder in einer beliebigen Rasterung zueinander, also in einem vorgegeben Lochmuster, angeordnet. Die Anordnung der mehreren Durchgangsöffnungen ist dabei auf andere Verstellmittel abgestimmt. So ist beispielsweise über das Lochmuster eine bestimmte Teilung vorgebbar, beispielsweise alle 30 mm eine Durchgangsöffnung.

Die Verstellmittel, beispielsweise zum Verbinden zweier Haltearmteile, sind dann angepasst auf die vorgegeben Teilung für einen entsprechenden Verstellweg, beispielsweise von etwa 30 mm ausgebildet. Das heißt, der Verstellweg eines nicht integrierten Verstellmittels entspricht einer Teilung zwischen zwei benachbarten Verbindungsmittel mit integrierten Verstellmitteln, oder einem Prozentteil einer Teilung, beispielsweise 10, 20, 25, 50, 75, 100, 125, 150 oder 200 Prozent. Bei einer kontinuierlichen Verteilung der Verbindungsmittel mit integrierten Verstellmitteln ist eine Anpassung der separaten Verstellmittel beliebig wählbar.

Die Verbindungsmittel mit integrierten Verstellmitteln sind in einer Ausführungsform als Durchgangsöffnung-Leiste oder -Anordnung ausgebildet. Beispielsweise weist der Haltearm in dem Bereich, in dem eine Verbindung mit dem Verbindungsträger vorgesehen ist, eine entsprechende Durchgangsöffnungsanordnung auf. Üblicherweise sind auch die Ladebodenschienen mit einer zumindest ähnlichen Durchgangsöffnungs-Leiste oder -Anordnung ausgebildet. Auf diese Weise ist eine durchgehende Steckverbindung von Ladebodenschiene über den oder die Verbindungsträger und den Haltearm mittels eines Bolzens oder mehrerer Bolzen realisierbar. Damit die Durchgangsöffnungen von Ladebodenschiene, Verbindungsträger und Haltearm für die Steckverbindung im Wesentlichen fluchtend angeordnet sind, ist in einer Ausführungsform der Haltearm über Verstellmittel in seiner Haupterstreckungsrichtung (x-Richtung) verstellbar, und das im Bereich des maximalen Lochabstands der Verbindungsmittel mit integrierten Verstellmitteln. Auf diese Weise ist auch bei ursprünglich nicht fluchtend ausgerichteten Durchgangsöffnungen eine fluchtende Anordnung durch Betätigung der Verstellmittel realisierbar.

Die Verstellmittel ermöglichen nicht nur eine Verstellung in einer Haupterstreckungsrichtung des jeweiligen Bauteils. Es sind auch Formänderungen in andere Richtungen möglich, beispielsweise in eine Breitenrichtung.

Eine Ausführungsform der vorliegenden Erfindung sieht deshalb auch vor, dass der Einsatz, der Haltearm und/oder der Verbindungsträger mindestens zweiteilig ausgebildet ist/sind, wobei mindestens zwei Teile des jeweiligen Bauteils über mindestens ein in ein Verbindungsmittel integriertes Verstellmittel verstellbar miteinander verbunden sind. In einer Ausführungsform sind die Verbindungsmittel in das jeweilige Bauteil integriert. Entsprechend ist das Verbindungsmittel, zumindest wenn es integriert Verstellmittel aufweist, auch relativ zu dem Bauteil verstellbar.

In einem anderen Ausführungsbeispiel ist deshalb vorgesehen, dass die Verstellmittel mindestens ein seitlich an der Sicherungseinrichtung hervorragendes Adapterteil umfassen, welches für einen Toleranzausgleich oder auch Spielausgleich ausgebildet ist. Insbesondere ist ein derartiges Adapterteil an dem Einsatz vorgesehen. Das Adapterteil dient dann zu einem Freiraumausgleich zwischen dem Einsatz und einer Wandung der Tasche. Derartige Adapterteile sind in einer Ausführung integriert in dem jeweiligen Bauteil ausgebildet. Bevorzugt ist jedoch, dass die Adapterteile je nach Bedarf an dem entsprechenden Bauteil angebracht werden. Hierzu sind entsprechende Verbindungsmittel an dem Adapterteil und/oder der Sicherungseinrichtung vorgesehen, beispielsweise auch Verbindungsmittel mit integrierten Verstellmitteln. Für eine korrekte Anbringung eines Adapterteils sind entsprechende Führungs- oder Positionierhilfen an dem Adapterteil und/oder dem Bauteil der Sicherungseinrichtung vorgesehen. Da die Taschen des Ladebodens, in welche der Einsatz gesteckt wird, oftmals variieren, sind die Adapterteile leicht austauschbar an dem Einsatz befestigt. Insbesondere sind hier Schnelllösemittel zur Befestigung, gegebenenfalls mit entsprechender Befestigungssicherung vorgesehen. Das Adapterteil ist bevorzugt aus einem gegenüber dem entsprechenden Bauteil der Sicherungseinrichtung weicheren und/oder elastischeren Material, sodass dieses Toleranzen oder Spiel besser als das Bauteil alleine ausgleichen kann. Für eine geeignete Sicherung und damit Kraftübertragung von einer Ladebodenschiene auf die Tasche ist es sinnvoll, das Taschenspiel, das heißt, das Spiel zwischen Einsatz und Taschenwandung, möglichst durch das Adapterteil zu minimieren. Durch einen elastischen oder weichen Werkstoff ist eine Dämpfung zwischen Einsatz und Taschenwandung realisiert, sodass eine geeignete Kraftübertragung realisiert wird. Derartige Adapterteile sind auch an anderen Stellen der Sicherungseinrichtung denkbar. So sieht eine Ausführungsform vor, dass ein Adapterteil zwischen Ladeboden und zumindest teilweise angrenzenden Teilen der Sicherungseinrichtung vorgesehen sind. Dieses Adapterteil ist beispielsweise in Form einer Antirutschbeschichtung ausgebildet, beispielsweise als Gummimatte. Als weitere Adapterteile kommen auch beliebige Feder-Speicher-Einheiten oder andere Dämpfungseinrichtungen zum Einsatz.

In einer Ausführungsform ist für eine möglichst optimierte Kraftübertragung von Ladebodenschiene zu Tasche vorgesehen, dass der Haltearm und der Verbindungsträger eine Ebene aufspannen, welche parallel, insbesondere angrenzende an den Ladeboden ausgebildet ist. Auf diese Weise liegen bevorzugt der Verbindungsträger und der Haltearm im Wesentlichen vollständig auf dem Ladeboden auf. Hierdurch ergibt sich eine flache Bauweise, die einen Transportgutraum, den ein zu transportierendes Gut einnehmen kann, nicht oder nur unwesentliche beeinträchtigt ist. Durch das Aufliegen ist ein ungewolltes Bewegen von Verbindungsträger und/oder Haltearm in eine z-Richtung, also in Richtung der Haupterstreckung einer Tasche, verhindert. Zudem ist so zwischen Ladeboden und Auflagefläche der Sicherungseinrichtung eine reibungsbehaftete Kontaktfläche geschaffen, welche sich bei Bedarf hinsichtlich des Reibungskoeffizienten optimieren lässt, beispielsweise durch Adapterteile. Auf diese Weise ist eine weiter verbesserte Kraftübertragung realisierbar.

Die einzelnen wesentlichen Bauteile der Sicherungseinrichtung sind bevorzugt aus einen relativ starren und/oder festen, insbesondere hochfesten, Material wie Stahl hergestellt. In anderen Ausführungen sind auch andere Materialien denkbar, insbesondere auch Verbundstoffe oder dergleichen. Die Verbindung zwischen den einzelnen BauteilenEinsatz, Haltearm und Verbindungsträger -- ist für eine geeignete Kraftübertragung bevorzugt stabil ausgebildet. Dies erfolgt durch geeignete Verbindungsmittel. Diese können in einer Ausführungsform auch als verstellbare Verbindungsmittel wie beispielsweise Gelenke ausgeführt sein, welche zum Beispiel über Arretiermittel in der gewünschten Position arretierbar sind. Bevorzugt sind Steckverbindungen wie Bolzenverbindungen, Schraubverbindungen und/oder andere hochfeste Verbindungen vorgesehen, die auch hohen Belastungen stand halten. Einsatz, Haltearm und/oder Verbindungsträger sind bevorzugt aus einem Vollmaterial ausgebildet. Zur Gewichtsreduzierung ist eine Ausführungsform der Sicherungseinrichtung aus zumindest einem Rohrmaterial ausgebildet, beispielsweise umfassend mindestens ein Vierkantrohr. So lässt sich beispielsweise der Einsatz, der Haltearm und/oder der Verbindungsträger als Vierkantrohr oder anderer Hohlkörper, zumindest teilweise, ausbilden.

In einer weiteren Ausführungsform der vorliegenden Erfindung ist vorgesehen, dass das zweite und/oder das dritte Verbindungsmittel jeweils als Klammereinrichtung ausgebildet ist, welche einen Aufnahmeraum zur Aufnahme und Angrenzung an das damit verbundene oder verbindbare Bauteil aufweist, sodass über die Klammereinrichtung der Verbindungsträger mit dem damit verbundenen oder verbindbaren Bauteil dieses zumindest teilweise umklammernd verbindbar ist. Die Klammereinrichtung ist bevorzugt U- oder C-förmig ausgebildet. Diese ist in einer Ausführungsform integriert, das heißt einteilig, mit dem Verbindungsträger ausgebildet. Bevorzugt ist die Klammereinrichtung in einer Ausführung separat zu dem Verbindungsträger ausgebildet und mit diesem über Verbindungsmittel verbunden. Dabei sind die Verbindungsmittel als Verbindungsmittel mit integrierten Verstellmitteln ausgebildet. Auf diese Weise ist die Klammereinrichtung an dem Verbindungsträger verstellbar angeordnet. Insbesondere umfassen die Verbindungsmittel ein Linearverstellmittel, mit dem sich die Klammereinrichtung entlang der Haupterstreckungsrichtung des Verbindungsträgers verfahren oder verstellen lässt. In einer anderen Ausführungsform sind die Verbindungsmittel als Steckverbindung ausgebildet.

Über ein Lochmuster ist die Klammereinrichtung mit einem Lochmuster an dem Verbindungsträger durch Einstecken eins Bolzens durch zwei korrespondierende Löcher oder Durchgangsöffnungen verstellbar und arretierbar.

Die Klammereinrichtung wird zur Verbindung mit der Ladebodenschiene und/oder dem Haltearm entsprechend auf die Ladebodenschiene bzw. den Haltearm gelegt, sodass die Ladebodenschiene bzw. der Haltearm in dem von der Klammereinrichtung gebildeten Aufnahmeraum angeordnet sind. Hierzu ist die Klammereinrichtung bevorzugt noch verstellbar mit dem Verbindungsträger ausgebildet und noch nicht mit diesem in einer bestimmten Position arretiert. Die Klammereinrichtung ist in einer Ausführungsform als Verbindungsmittel mit integriertem Verstellmittel ausgebildet, sodass sich die Form der Klammereinrichtung, insbesondere auch der Aufnahmeraum, beispielsweise über Adapterteile, an den gewünschten Einsatzzweck anpassen lässt. Als Verstellmittel kommen grundsätzlich auch jede Art von Feder-Speicher-Einrichtungen in Frage. Die Klammereinrichtung umklammert die in dem Aufnahmeraum aufgenommenen Bauteile zumindest teilweise. Damit eine Relativbewegung zwischen der Klammereinrichtung und dem aufgenommenen Bauteil vermieden wird, weist die Klammereinrichtung an ihren Stegen oder Schenkeln Durchgangsöffnungen auf. Durch die jeweilige Durchgangsöffnung lässt sich zur sicheren Befestigung ein Bolzen oder dergleichen für eine Steckverbindung führen. Der Bolzen erstreckt sich dann in die Hauptrichtung des Verbindungsträgers, das heißt in x-Richtung. Dabei durchdringt der Bolzen die Ladebodenschiene, den Verbindungsträger samt Klammereinrichtung(en) und den Haltearm. Die jeweilige Klammereinrichtung weist in einer Ausführungsform an ihren Schenkeln mehrere nebeneinander liegende Durchgangsöffnungen auf, sodass hier eine geeignete Verstellung und Verbindung realisierbar ist. Bevorzugt ist, dass die Steckverbindung jeweils mit einem oder mehreren nebeneinander angeordnet durchgehenden Bolzen realisiert wird, das heißt der Bolzen erstreckt sich über die gesamte Länge des Verbindungsträgers in dessen Haupterstreckungsrichtung hinaus. In einer anderen Ausführungsform ist eine Steckverbindung zwischen Ladebodenschiene und Verbindungsträger und zwischen Verbindungsträger und Haltearm realisiert. Die einzelnen Verbindung sind dabei gleich oder unterschiedlich ausbildbar. Bevorzugt sind gleiche Ausführungsformen vorgesehen.

Die Erfindung schließt weiter die technische Lehre ein, dass bei einer Verladeeinrichtung zum Verladen von auf über mindestens eine Ladebodenschiene gesicherten Transportblöcken aufliegenden Transportgut umfassend mindestens einen Ladeboden, wobei der Ladeboden sich quer zu einer Ladebodenebene erstreckende Taschen aufweist, vorgesehen ist, dass mindestens eine erfindungsgemäße Sicherungseinrichtung nach einem der vorherigen Ansprüche 1 bis 7 über mindestens einen in mindestens eine Tasche des Ladebodens gesteckten Einsatz mit dem Ladeboden verbunden ist.

Die nicht beanspruchte Verladeeinrichtung umfasst mindestens einen Ladeboden, der bevorzugt in Form einer planen Ebene, wie eine Ladefläche eines Lastkraftwagens oder Eisenbahnwaggons, ausgebildet ist. In anderen Ausführungsformen sind auch zumindest teilweise gekrümmte Ladeböden vorgesehen. In weiteren Ausführungsformen sind mehrere Ladeböden vorgesehen. Beispielsweise sind in einer Ausführungsform die Ladeböden übereinander gestapelt, beispielsweise über entsprechende Stützen oder dergleichen. Auf diese Weise ergibt sich eine regalartige Verladeeinrichtung. Jeder Ladeboden weist mindestens eine, bevorzugt mehrere Taschen auf. Die Taschen sind bevorzugt seitlich außen an den jeweiligen Ladeböden vorgesehen, können in anderen Ausführungsformen beliebig verteilt über dem Ladeboden angeordnet sein. Die Tasche ist in einer Ausführungsform als eine Art Sackloch, in anderen Ausführungsformen als Durchgangsöffnung ausgebildet. Der Ladeboden ist beispielsweise Bestandteil einer beliebigen Kraftmaschine, wie einem Lastkraftwagen, einem Eisenbahnwagen oder einem beliebigen anderen Transportmittel.

Die nicht beanspruchte Verladeeinrichtung weist mindestens eine erfindungsgemäße Sicherungseinrichtung auf. Um kleinbauender oder gewichtsparender ausgebildet zu sein, sind beispielsweise mehrere, insbesondere kleinere, Sicherungseinrichtungen vorgesehen. Weist der Ladeboden seitlich links und rechts oder an anderen Stellen jeweils Taschen auf, so ist in einer Ausführungsform an jeder Seite eine Sicherungseinrichtung vorgesehen. Die Anzahl der Sicherungseinrichtungen ist je nach Anwendungsfall und Einsatzzweck variierbar. Beispielsweise ist in einer Ausführungsform auch eine Stütze zum Stützen eines weiteren Ladebodens oberhalb des ersten Ladebodens in die Sicherungseinrichtung integriert, beispielsweise als Verlängerung des Einsatzes.

Die Erfindung schließt zudem die technische Lehre ein, dass bei einer Transporteinrichtung zum Verladen von Transportgut, umfassend mindestens eine Ladebodenschiene und mindestens einen Transportblock, wobei der mindestens eine Transportblock an der Ladebodenschiene gesichert ist, vorgesehen ist, dass die Ladebodenschiene mit mindestens einer erfindungsgemäßen Verladeeinrichtung verbunden ist.

Die nicht beanspruchte Transporteinrichtung umfasst mindestens einen Transportblock, der auf dem Ladeboden angeordnet ist. Der Transportblock ist zum Halten von Transportgut ausgebildet. Bevorzugt ist das Transportgut ein Rohr oder dergleichen. Entsprechend weist der Transportblock mindestens eine Vertiefung oder vertiefte Stelle auf. Vorzugsweise sind zwei voneinander beabstandete Transportblöcke vorgesehen, die zwischen sich eine vertiefte Stelle ausbilden, sodass ein Rohr oder ein beliebiges anderes Transportgut zwischen den beiden Blöcken stabil gelagert ist.

Damit die Transportblöcke definierbar zueinander und zum Ladeboden angeordnet sind, umfasst die Transporteinrichtung mindestens eine Ladebodenschiene . Die Transportblöcke sind über Verbindungsmittel mit der Ladebodenschiene verbunden. Die Verbindungsmittel sind beispielsweise als formschlüssige, kraftschlüssige oder stoffschlüssige Verbindungsmittel ausgebildet. Bevorzugt sind die Transportblöcke entlang der Ladebodenschiene verstellbar mit dieser Verbunden, beispielsweise über eine oder mehrere Steckverbindungen. Die Ladebodenschiene erstreckt sich bevorzugt über die Breite des Ladebodens und ist mit mehreren Transportblöcken oder Transportblockpaaren verbunden. Für eine variierbare Verbindung mit den Transportblöcken, weisen die Verbindungsmittel integrierte Verstellmittel auf. Grundsätzlich müssen die Verstellmittel und die Verbindungsmittel bei einer integrierten Bauweise nicht einteilig miteinander ausgebildet sein, sondern können auch mehrteilig und zumindest teilweise miteinander verbunden sein. Insbesondere weist die Ladebodenschiene eine Durchgangsloch-Leiste oder -Anordnung auf, die für eine Steckverbindung geeignet ist. Die Durchgangslöcher erstrecken sich dabei in eine x-Richtung, das heißt zu dem Verbindungsträger hin. Für eine Verbindung mit den Transportblöcken ist beispielsweise auch eine Öffnungsanordnung in z-Richtung, das heißt im Wesentlichen vertikal, vorgesehen. Die Transporteinrichtung umfasst mindestens eine Ladebodenschiene pro Ladeboden. In anderen Ausführungsformen sind auch mehrere Ladebodenschienen vorgesehen. Bevorzugt sind diese parallel zueinander ausgerichtet.

Auch schließt die Erfindung die technische Lehre ein, dass bei einem nicht beanspruchten System zum Sichern einer Ladebodenschiene, insbesondere einer Ladebodenschiene, an der mindestens ein Transportblock angebracht ist, über eine erfindungsgemäße Sicherungseinrichtung, die Schritte vorgesehen sind: Einstecken eines Einsatzes der Sicherungseinrichtung in eine Tasche eines Ladebodens, sodass der Haltearm und der Verbindungsträger eine Ebene aufspannen, die im Wesentlichen parallel zu dem Ladeboden liegt, Verbinden der Ladebodenschiene mit der Sicherungseinrichtung, sodass die Ladebodenschiene zumindest in zwei Richtungen über die Sicherungseinrichtung gegen ungewollte Bewegungen gesichert ist, wobei über die Verstellmittel eine Verstellung der Sicherungseinrichtung durchgeführt wird, sodass eine geeignete Verbindung von Ladebodenschiene und Sicherungseinrichtung realisiert wird.

Da die Transportblöcke und/oder die Ladebodenschiene nicht direkt mit dem Ladeboden verbindbar sind, muss die Ladebodenschiene anderweitig gegen ein Bewegen gesichert werden. Für die Sicherung bieten sich die Taschen des Ladebodens an. Insofern wird ein Einsatz der Sicherungseinrichtung in eine der Taschen gesteckt. Von dem Einsatz ist eine Kraftübertragung zu der Ladebodenschiene erforderlich. Insofern wird die Ladebodenschiene mit der Sicherungseinrichtung verbunden. Hierzu ist zunächst eine Verbindung vom Einsatz zu der Ladebodenschiene erforderlich. Die Verbindung wird über den Haltearm und den Verbindungsträger, genauer zwei Verbindungsträger hergestellt. Der jeweilige Verbindungsträger weist entsprechende Verbindungsmittel auf, mit denen er mit dem Haltearm und der Ladebodenschiene verbindbar ist. Diese Verbindungsmittel sind als verstellbare Klammereinrichtung ausgebildet und werden von oben auf die Ladebodenschiene und den Haltearm gelegt, sodass diese in dem Aufnahmeraum der Klammereinrichtung aufgenommen sind. Dabei wird der Verbindungsträger so ausgerichtet, dass Verstellmittel, bevorzugt in Form von Durchgangsöffnungen, fluchtend zu den komplementären Verstellmitteln des Haltearms und/oder der Ladebodenschiene ausgerichtet sind. Da nicht gewährleistet ist, dass die zusammenwirkenden Verstellmittel von Ladebodenschiene und Haltearm fluchtend zueinander ausgebildet sind, muss eine Feinausrichtung durchgeführt werden. Dies erfolgt, indem der Haltearm verstellt wird. Hierzu wird der Haltearm in seiner Längsrichtung auseinander- oder zusammengefahren, sodass die zusammenwirkenden Verstellmittel, das heißt die Durchgangsöffnungen von Haltearm und Ladebodenschiene, fluchtend ausgerichtet sind.

Die Erfindung wird nachfolgend anhand von in den Zeichnungen dargestellten Ausführungsbeispielen näher erläutert. Für gleiche oder ähnliche Bauteile oder Merkmale werden dabei einheitliche Bezugszeichen verwendet. Merkmale oder Bauteile verschiedener Ausführungsformen können kombiniert werden, um so weitere Ausführungsformen zu erhalten. Sämtliche aus den Ansprüchen der Beschreibung oder Zeichnungen hervorgehenden Merkmale und/oder Vorteile einschließlich konstruktiver Einzelheiten, räumliche Anordnung und Verfahrensschritte, können so für sich als auch in verschiedensten Kombinationen erfindungswesentlich sein.

Es zeigen:
Fig. 1 schematisch in einer Vorderansicht eine Ausführungsform einer Sicherungseinrichtung,
Fig. 2 schematisch in einer Seitenansicht die Ausführungsform nach Fig. 1 und
Fig. 3 schematisch in einer Draufsicht die Ausführungsform nach Fig. 1 und Fig. 2.

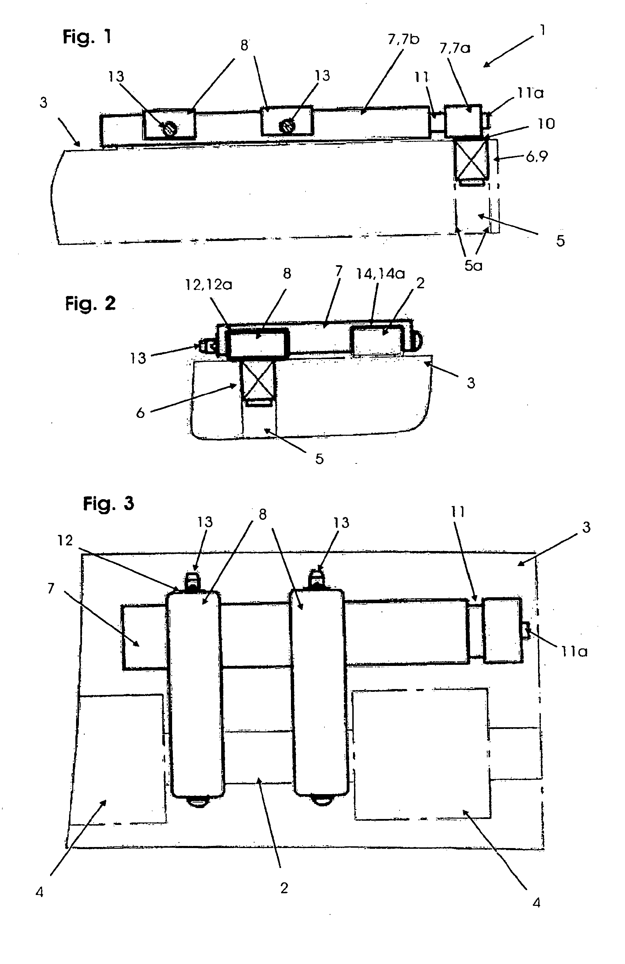

Die Fig. 1 bis 3 zeigen schematisch in einer Ausführungsform eine Sicherungseinrichtung 1. Fig. 1 zeigt schematisch in einer Vorderansicht die Ausführungsform der Sicherungseinrichtung 1.

Fig. 2 zeigt schematisch die Ausführungsform nach Fig. 1 in einer Seitenansicht und Fig. 3 zeigt schematisch in einer Draufsicht die Ausführungsform nach Fig. 1 und Fig. 2. Die Sicherungseinrichtung 1 ist für eine Ladebodenschiene 2 auf einem Ladeboden 3 ausgebildet. Die Ladebodenschiene 2 nach Fig. 1 bis 3 ist für Transportblöcke 4, insbesondere für Rohrtransportblöcke, für den Ladeboden 3 einer Transporteinrichtung wie einem Lastkraftwagen, einem Eisenbahnwaggon oder Ähnlichem (hier nicht dargestellt), mit Taschen 5 ausgebildet. Der Ladeboden 3 ist bevorzugt als plane oder im Wesentlichen plane Ebene ausgebildet und bildet dabei eine im Wesentlichen horizontale Auflagefläche. Auf dem Ladeboden 3 liegt eine Ladebodenschiene 2 oder liegen mehrere Ladebodenschienen 2 auf. Die Ladebodenschiene 2 gemäß dem dargestellten Ausführungsbeispiel ist nicht direkt mit dem Ladeboden 3 verbunden oder gesichert. An der Ladebodenschiene 2 sind die Transportblöcke 4 befestigt. Diese sind über entsprechende Befestigungsmittel (hier nicht dargestellt) verstellbar oder fest mit der Ladebodenschiene 2 verbunden. Der Ladeboden 3 umfasst weiter Taschen 5, die sich quer, insbesondere senkrecht oder rechtwinklig, zu dem Ladeboden 3 erstrecken. Die Taschen 5, die beispielsweise als Einsatztaschen oder Rungentaschen ausgebildet sind, erstrecken sich somit vertikal oder in z-Richtung und sind durch eine entsprechende Taschenwandung 5a seitlich, das heißt in Umfangsrichtung und stirnseitig, begrenzt. In der dargestellten Ausführungsform weist die Tasche 5 in ihrer Erstreckungsrichtung (vertikal) einen konstanten Querschnitt auf.

Um nun die Ladebodenschiene 2 und somit die Transportblöcke 4 und letztendlich das darauf gelagerte Transportgut gegen ungewollte Bewegungen zu sichern, ist die Sicherungseinrichtung 1 vorgesehen.

Die Sicherungseinrichtung 1 umfasst einen Einsatz 6, einen Haltearm 7 und zwei Verbindungsträger 8. Der Einsatz 6 ist im Wesentlichen komplementär zu der Tasche 5 ausgebildet. Da die Taschen 5 von Ladeboden 3 zu Ladeboden 3 und auch innerhalb eines Ladebodens 3 unterschiedlich ausgebildet sein können, weist der Einsatz 6 Adapterteile 9 auf. Die Adapterteile 9 sind austauschbar oder integriert an dem Einsatz 6 angebracht. Bevorzugt sind die Adapterteile 9 aus einem elastischeren Material als der Einsatz 6 ausgebildet. Insbesondere sind die Adapterteile 9 aus Kunststoff ausgebildet. Die Adapterteile 9 sind so ausgebildet, dass diese einen Freiraum oder ein Spiel zwischen Taschenwandung 5a und Einsatz 6 minimieren, sodass eine günstige Kraftübertragung von Einsatz 6 auf Taschenwandung 5a realisiert ist. Auf diese Weise ist der Einsatz 6 an die unterschiedlichsten Taschenformen anpassbar. Somit weist der Einsatz 6 Verstellmittel auf, mit denen seine Form veränderbar, insbesondere verstellbar ist. Bei nicht integrierten Adapterteilen 9 sind diese über Verbindungsmittel (hier nicht dargestellt) mit dem Einsatz 6 verbindbar. Bevorzugt sind die Verbindungsmittel in die als Verstellmittel fungierenden Adapterteile 9 integriert ausgebildet. Zudem weist der Einsatz 6 korrespondierende Verbindungsmittel auf, sodass eine sichere Verbindung von Adapterteilen 9 und Einsatz 6 gewährleistet ist.

Der Einsatz 6 ist in dem dargestellten Ausführungsbeispiel über erste Verbindungsmittel 10 mit dem Haltearm 7 verbunden. Die ersten Verbindungsmittel 10 sind vorliegend als stoffschlüssige Verbindungsmittel 10 in Form einer Verschweißung ausgebildet. Der Haltearm 7 ist so an dem Einsatz 6 angeschweißt bzw. mit diesem verbunden, dass dieser auf einer Stirnfläche auf dem Einsatz 6 aufliegt und sich von diesem etwa rechtwinklig in eine horizontale x-Richtung angrenzend zu einer Ladebodenebene des Ladebodens 3 erstreckt. In dem vorliegenden Ausführungsbeispiel ist der Haltearm 7 zweiteilig ausgebildet mit einem einsatznahen Teil 7a und einem verbindungsträgernahen Teil 7b. Die beiden Teile 7a und 7b sind über Verbindungsmittel mit integrierten Verstellmitteln 11 verstellbar, genauer in x-Richtung verstellbar verbunden. Über die Mittel 11 sind die beiden Teile 7a und 7b auseinander- oder zueinander fahrbar, sodass der Haltearm in x-Richtung ausfahrbar oder einfahrbar ist. Betätigt werden die Mittel 11 über einen entsprechenden Aktuator, hier einer Verstellschraube 11 a. An dem Haltearm 7, genauer an dessen Teil 7b, sind parallel und beabstandet zueinander zwei Verbindungsträger 8 angeordnet, die etwa rechtwinklig horizontal in eine y-Richtung von dem Haltearm 7 abragen. Die Verbindungsträger 8 sind über zweite Verbindungsmittel 12 in Form einer Klammereinrichtung 12a mit dem Haltearm 7 verbunden. Dabei umklammert die Klammereinrichtung 12a den Haltearm 7 und nimmt diesen teilweise in einem Aufnahmeraum auf. Die Verbindungsmittel 12 sind ebenfalls als Verbindungsmittel mit integrierten Verstellmitteln ausgebildet. Die Verstellmittel sind durch eine Steck- oder Bolzenverbindung realisiert. Über diese lassen sich die Verbindungsträger 8 verstellbar an komplementären Verstellmitteln des Haltearms 7 in Form von Durchgangsöffnungen jeweils über einen entsprechenden Bolzen 13 verstellbar befestigen. Zur Verbindung mit der Ladebodenschiene 2 weist der Verbindungsträger 8 dritte Verbindungsmittel 14 auf. Auch diese Verbindungsmittel 14 sind als Verbindungsmittel mit integrierten Verstellmitteln 14 ausgebildet. Dabei sind die zweiten und dritten Verbindungsmittel 13,14 im wesentlichen baugleich ausgeführt. Entsprechend sind auch die dritten Verbindungsmittel 14 in Form einer Klammereinrichtung 14a mit der Ladebodenschiene 2 verbunden. Dabei umklammert die Klammereinrichtung 14a die Ladebodenschiene 2 und nimmt diese teilweise in einem Aufnahmeraum auf. Die Verstellmittel sind durch eine Steck- oder Bolzenverbindung realisiert. Über diese lassen sich die Verbindungsträger 8 verstellbar an komplementären Verstellmitteln der Ladebodenschiene 2 in Form von Durchgangsöffnungen jeweils über einen entsprechenden Bolzen 13 verstellbar befestigen. In dem vorliegenden Ausführungsbeispiel wird für die Verbindung des Verbindungsträgers 8 mit der Ladebodenschiene 2 und dem Haltearm 7 ein gemeinsamer Bolzen 3 verwenden. Der Bolzen 13 erstreckt sich somit entlang des gesamten Verbindungsträgers 8 und über diesen hinaus bis durch den Haltearm 7 und die Ladebodenschiene 2. Um nun die Ladebodenschiene 2 an der Sicherungseinrichtung 1 zu befestigen, wird wie folgt vorgegangen. Die Sicherungseinrichtung 1 wird ohne Verbindungsträger 8 mit dem Einsatz 6 in die entsprechende Tasche 5 gesteckt.

### Bezugszeichenliste

- 1: Sicherungseinrichtung
- 2: Ladebodenschiene
- 3: Ladeboden
- 4: Transportblock
- 5: Tasche
- 5a: Taschenwandung
- 6: Einsatz
- 7: Haltearm
- 7a: Haltearmteil (einsatznah)
- 7b: Haltearmteil (verbindungsträgernah)
- 8: Verbindungsträger
- 9: Adapterteil
- 10: Verbindungsmittel
- 11: Verstellmittel (Verbindungsmittel)
- 11 a: Verstellschraube
- 12: Verbindungsmittel
- 12a: Klammereinrichtung
- 13: Bolzen
- 14: Verbindungsmittel
- 14a: Klammereinrichtung

## Patentansprüche

1. Sicherungseinrichtung (1) für eine Ladebodenschiene (2) auf einem Ladeboden (3), insbesondere für eine Ladebodenschiene (2) für (Rohr-)Transportblöcke (4) für einen Ladeboden (3) einer Transporteinrichtung mit Taschen (5), umfassend mindestens einen Einsatz (6) zum Einsetzen der Sicherungseinrichtung (1) in eine korrespondierende Tasche (5) eines Ladebodens (3), mindestens einen Haltearm (7), der mit dem Einsatz (6) über mindestens ein erstes Verbindungsmittel (11) quer von diesem abragend verbunden ist **dadurch gekennzeichnet daß** mindestens einen Verbindungsträger (8), der mit dem Haltearm (7) über mindestens ein zweites Verbindungsmittel (12) quer von dem abragend verbunden ist, wobei der Verbindungsträger (8) mindestens ein drittes Verbindungsmittel (14) aufweist, um mit der Ladebodenschiene (2) verbunden zu werden und so eine Sicherung der Ladebodenschiene (2) über die Sicherungseinrichtung (1) im Zusammenwirken mit der Tasche (5) zu realisieren.

2. Sicherungseinrichtung (1)nach Anspruch 1, **dadurch gekennzeichnet, dass** die Sicherungseinrichtung (1) mindestens ein Verstellmittel (11) aufweist, über welches die Sicherungseinrichtung (1) in mindestens eine Richtung verstellbar ist.

3. Sicherungseinrichtung (1) nach einem der Ansprüche 1 bis 2, **dadurch gekennzeichnet, dass**
mindestens ein Verstellmittel (11) mit mindestens einem der Verbindungsmittel (11,12,14) integriert ausgebildet ist.

4. Sicherungseinrichtung (1) nach einem der vorherigen Ansprüche 1 bis 3, **dadurch gekennzeichnet, dass**
der Einsatz (6), der Haltearm (7) und/oder der Verbindungsträger (8) mindestens zweiteilig ausgebildet ist, wobei mindestens zwei Teile (7a, 7b) über mindestens ein in ein Verbindungsmittel integriertes Verstellmittel (11) verstellbar miteinander verbunden sind.

5. Sicherungseinrichtung (1) nach einem der vorherigen Ansprüche 1 bis 4, **dadurch gekennzeichnet, dass**
die Verstellmittel mindestens ein seitlich an der Sicherungseinrichtung (1) hervorragendes Adapterteil (9) umfassen, welches für einen Toleranzausgleich ausgebildet ist.

6. Sicherungseinrichtung (1) nach einem der vorherigen Ansprüche 1 bis 5, **dadurch gekennzeichnet, dass**
der Haltearm (6) und der Verbindungsträger (8) eine Ebene aufspannen, welche parallel, insbesondere angrenzende an den Ladeboden (3) ausgebildet ist.

7. Sicherungseinrichtung (1) nach einem der vorherigen Ansprüche 1 bis 6, **dadurch gekennzeichnet, dass**
das zweite und/oder das dritte Verbindungsmittel (12,14) jeweils als Klammereinrichtung (12a,14a) ausgebildet ist, welche einen Aufnahmeraum zur Aufnahme und Angrenzung an das damit verbundene oder verbindbare Bauteil aufweist, sodass über die Klammereinrichtung (12a,14a) der Verbindungsträger (8) mit dem damit verbundenen oder verbindbaren Bauteil dieses zumindest teilweise umklammernd verbindbar ist.

## Claims

1. Securing device (1) for a loading floor rail (2) on a loading floor (3), in particular for a loading floor rail (2) for (pipe) transporting blocks (4) for a loading floor (3) of a transporting device having pockets (5), comprising at least one insert (6) for inserting the securing device (1) into a corresponding pocket (5) of a loading floor (3), at least one holding arm (7) which is connected to the insert (6) via at least one first connecting means (11) in a manner projecting transversely therefrom, **characterised in that** at least one connecting support (8) which is connected to the holding arm (7) via at least one second connecting means (12) in a manner projecting transversely therefrom, the connecting support (8) having at least one third connecting means (14) in order to be connected to the loading floor rail (2) and thus realise a securing of the loading floor rail (2) via the securing device (1) in cooperation with the pocket (5).

2. Securing device (1) according to Claim 1, **characterised in that**
the securing device (1) has at least one adjusting means (11), via which the securing device (1) is adjustable in at least one direction.

3. Securing device (1) according to one of Claims 1 to 2, **characterised in that**
at least one adjusting means (11) is formed in an integrated manner with at least one of the connecting means (11,12,14).

4. Securing device (1) according to one of the preceding Claims 1 to 3, **characterised in that**
the insert (6), the holding arm (7) and/or the connecting support (8) is formed of at least two parts, at least two parts (7a, 7b) being adjustably connected to one another via at least one adjusting means (11) integrated in a connecting means.

5. Securing device (1) according to one of the preceding Claims 1 to 4, **characterised in that**
the adjusting means comprise at least one adapter part (9) which projects laterally on the securing device (1) and is designed for tolerance compensation.

6. Securing device (1) according to one of the preceding Claims 1 to 5, **characterised in that**
the holding arm (6) and the connecting support (8) define a plane which is formed parallel, in particular adjacent to the loading floor (3).

7. Securing device (1) according to one of the preceding Claims 1 to 6, **characterised in that**
the second and/or the third connecting means (12,14) is in each case formed as a clamp device (12a,14a) which has a receiving space for receiving and adjoining the component connected or connectable thereto, so that the connecting support (8) is connectable, via the clamp device (12a,14a), to the component connected or connectable thereto, in a manner at least partially embracing this component.

## Revendications

1. Dispositif de sécurisation (1) pour un rail de plateforme de chargement (2) sur une plateforme de chargement (3), en particulier pour un rail de plateforme de chargement (2) pour blocs de transport (de tubes) (4) pour une plateforme de chargement (3) d'un dispositif de transport avec des poches (5), comprenant au moins un insert (6) pour l'insertion du dispositif de sécurisation (1) dans une poche (5) correspondante d'une plateforme de chargement (3), et au moins un bras de retenue (7) qui est raccordé à l'insert (6) par le biais d'au moins un premier moyen de raccordement (11) en faisant saillie transversalement par rapport à ce dernier, **caractérise en ce qu'**au moins un support de raccordement (8) est raccordé au bras de retenue (7) par le biais d'au moins un deuxième moyen de raccordement (12) en faisant saillie transversalement par rapport à ce dernier, le support de raccordement (8) présentant au moins un troisième moyen de raccordement (14) pour être raccordé au rail de plateforme de chargement (2) et réaliser ainsi une sécurisation du rail de plateforme de chargement (2) par le biais du dispositif de sécurisation (1) en coopération avec la poche (5).

2. Dispositif de sécurisation (1) selon la revendication 1, **caractérisé en ce que** le dispositif de sécurisation (1) présente au moins un moyen de réglage (11) par le biais duquel le dispositif de sécurisation (1) peut être déplacé dans au moins une direction.

3. Dispositif de sécurisation (1) selon une des revendications 1 à 2, **caractérisé en ce qu'**au moins un moyen de réglage (11) est constitué de façon intégrée avec au moins un des moyens de raccordement (11, 12, 14).

4. Dispositif de sécurisation (1) selon une des revendications précédentes 1 à 3, **caractérisé en ce que** l'insert (6), le bras de retenue (7) et/ou le support de raccordement (8) est constitué en au moins deux parties, au moins deux parties (7a, 7b) étant raccordées l'une à l'autre de façon réglable par le biais d'au moins un moyen de réglage (11) intégré dans un moyen de raccordement.

5. Dispositif de sécurisation (1) selon une des revendications précédentes 1 à 4, **caractérisé en ce que** les moyens de réglage comprennent au moins une partie d'adaptation (9) qui fait saillie latéralement sur le dispositif de sécurisation (1) et qui est constituée pour une compensation de tolérances.

6. Dispositif de sécurisation (1) selon une des revendications précédentes 1 à 5, **caractérisé en ce que** l'insert (6) et le support de raccordement (8) définissent un plan qui est constitué de façon parallèle, en particulier de façon contiguë, à la plateforme de chargement (3).

7. Dispositif de sécurisation (1) selon une des revendications précédentes 1 à 6, **caractérisé en ce que** le deuxième et/ou le troisième moyen de raccordement (12, 14) est respectivement constitué en tant que dispositif de serrage (12a, 14a) qui présente un espace de réception pour la réception du composant et la juxtaposition au composant ainsi raccordé ou pouvant être raccordé, de telle sorte que, par le biais du dispositif de serrage (12a, 14a), le support de raccordement (8) peut être raccordé au composant ainsi raccordé ou pouvant être raccordé en enserrant au moins partiellement ce composant.
